# EUROPEAN PATENT SPECIFICATION

(11) **EP 3 094 929 B1**
(45) Date of publication and mention of the grant of the patent: **11.08.2021**
(21) Application number: 15737929.8
(22) Date of filing: 15.01.2015
(51) Int. Cl.: F25B 21/04

(54) **HEATING COOLING SYSTEM FOR FOOD STORAGE CABINET**
HEIZ-KÜHL-SYSTEM FÜR LEBENSMITTELAUFBEWAHRUNGSSCHRANK
SYSTÈME DE CHAUFFAGE ET DE REFROIDISSEMENT POUR GARDE-MANGER D'ENTREPOSAGE DES ALIMENTS

(30) Priority: 16.01.2014 US 201461928173 P
(43) Date of publication of application: 23.11.2016
(73) Proprietor: Bi-Polar Holding Company LLC, Salt Lake City, UT 84121 (US)
(72) Inventor: TURNER, Jeffrey, Salt Lake City, UT 84121 (US); LYON, Tyler, Bluffdale, UT 84065 (US); WINEGAR, Daniel, Bluffdale, UT 84065 (US)
(74) Representative: Riederer Hasler & Partner Patentanwälte AG
(86) International application number: PCT/US2015/011583
(87) International publication number: WO 2015/109081

(56) References cited:
- DE-A1-102005 036 492
- DE-A1-102006 001 304
- DE-A1-102010 026 601
- JP-A- H10 300 307
- US-A- 3 138 934
- US-A- 3 324 667
- US-A1- 2002 139 123
- US-A1- 2004 025 516
- US-A1- 2006 225 441
- US-A1- 2009 249 796
- None

## Description

### TECHNICAL FIELD

The present invention relates generally to the service of food at a desired temperature and, more particularly, to systems and apparatus for heating and cooling food for transport and serving.

### BACKGROUND

Perishable foods for home, market, catering and restaurant buffets are conventionally chilled by ice or commercially manufactured containers of freezable material, or by refrigeration systems. When the ice melts and the freezable material warms, these cooling media lose their ability to keep foods safe and may render them unsuitable or hazardous for consumption. Typical refrigeration systems are bulky and costly, requiring condensers, coils and harmful chemicals and, further, must be serviced and maintained. Additionally, they are not easily adapted for portability.

Other foods need to be heated or kept warm for home, market, catering and restaurant buffet service. Conventional sources of heat include flame and electricity, e.g. by use of alcohol-based combustible gels, such as those offered under the tradename STERNO, or by electric hot plates. Flame sources often produce local hot spots and uneven heating and may produce fumes, odors, or other combustion products. The indoor pollution and health risks to food service workers and patrons from these combustion products are beginning to be viewed with concern by those in the industry.

JP H10 300307 A discloses a thermoelectric module type electric refrigerator for cooling the inside of refrigerator by using a thermoelectric member such as a Peltier element. There are two separate heat exchanging portions 26a,26b disposed on two opposite sides of the Peltier element. The first heat exchanging portion 26a is installed in a heat dissipation system A whereas the second heat exchanging portion 26b is installed in a heat absorption system B which cools the inside of the refrigerator. For the heat exchange in the system B between the air inside the refrigerator and the refrigerant a so-called cooling heat exchanger 20 is used. The heat absorption system B connects the cooling heat exchanger 20, the second heat exchange section 26b and a pump 14 for pumping the refrigerant by pipe lines 32. A fan 22 provided in the upper part of a refrigerator wall serves for sending the cool air into the storage chamber of the refrigerator.

The first heat exchanging portion 26a and the second heat exchanging portion 26b have a so-called manifold structure in which a large number of already-known labyrinth-like heat exchanging passages are formed in parallel so as to improve thermal efficiency.

US Patent 6344630 to Jarvis et al., discloses a heated food cart which uses a thermoelectric heater "with an air circulatory system over the heating members of the thermoelectric solid state." However, such cabinets may take a long time to reach a desired temperature and may be relatively inefficient.

Consequently, a system or method that allows for a transport cabinet to both heat and cool food which is efficient, and capable of reaching a desired temperature in a short amount of time with a simple set of controls and using only a single-type of temperature adjusting element would be an improvement in the art. The ability to use such a system with pre-existing food service trays, carts and other applications would be an additional improvement.

### SUMMARY

The present invention provides a system for bringing a cabinet to a desired temperature and maintaining that desired temperature according to claim 1.

### DESCRIPTION OF THE DRAWINGS

It will be appreciated by those of ordinary skill in the art that the various drawings are for illustrative purposes only. The nature of the present disclosure, as well as other varying embodiments, may be more clearly understood by reference to the following detailed description, and to the drawings.
FIG. 1 and 2 are front views of a food transport cabinet including systems in accordance with the present disclosure.
FIG. 3 is a close view of the interior of the cabinet of FIGS. 1 and 2.

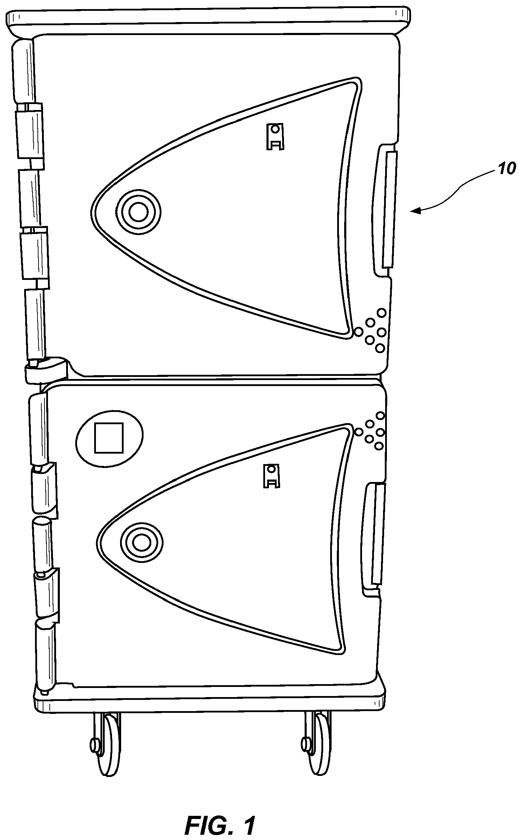

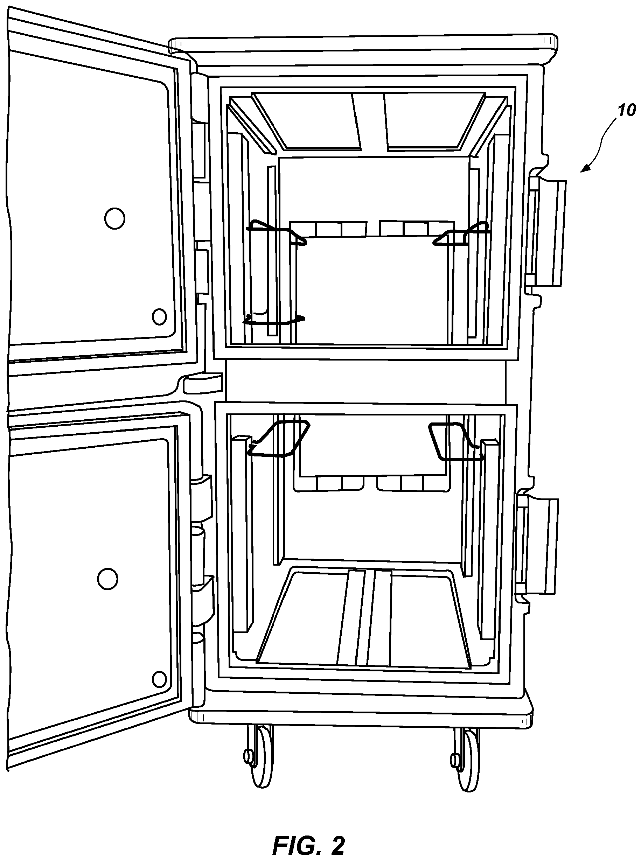

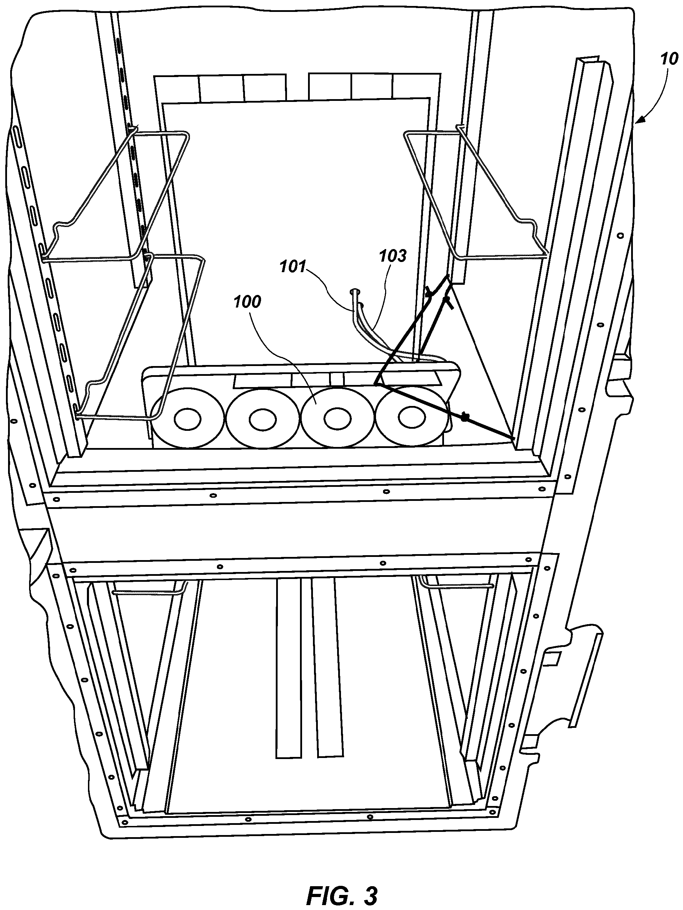

FIG. 3 is a rear view of the cabinet of FIGS. 1-3.

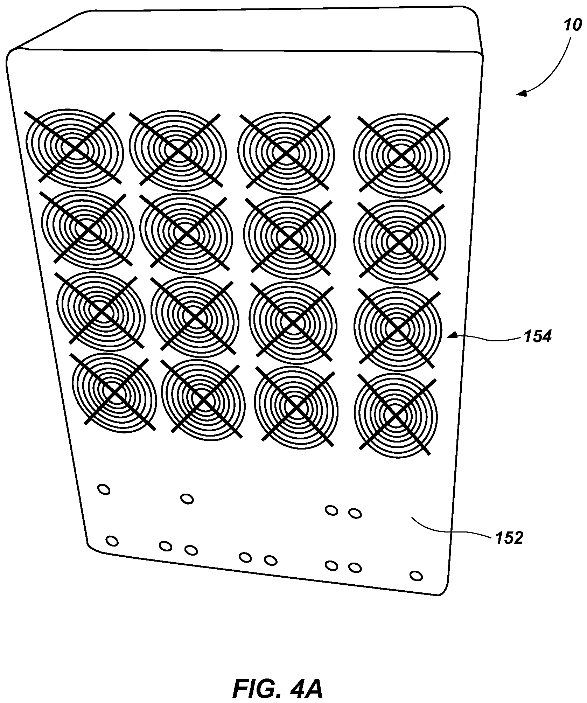

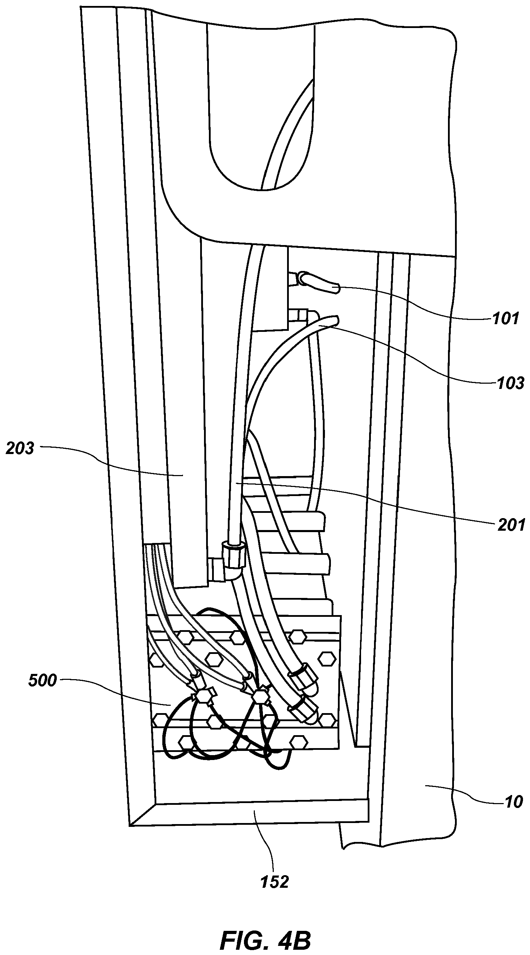

FIG. 4 is a partial side view of the cabinet of FIGS 1-3 showing the relationship of some of the components of the heating and cooling system.

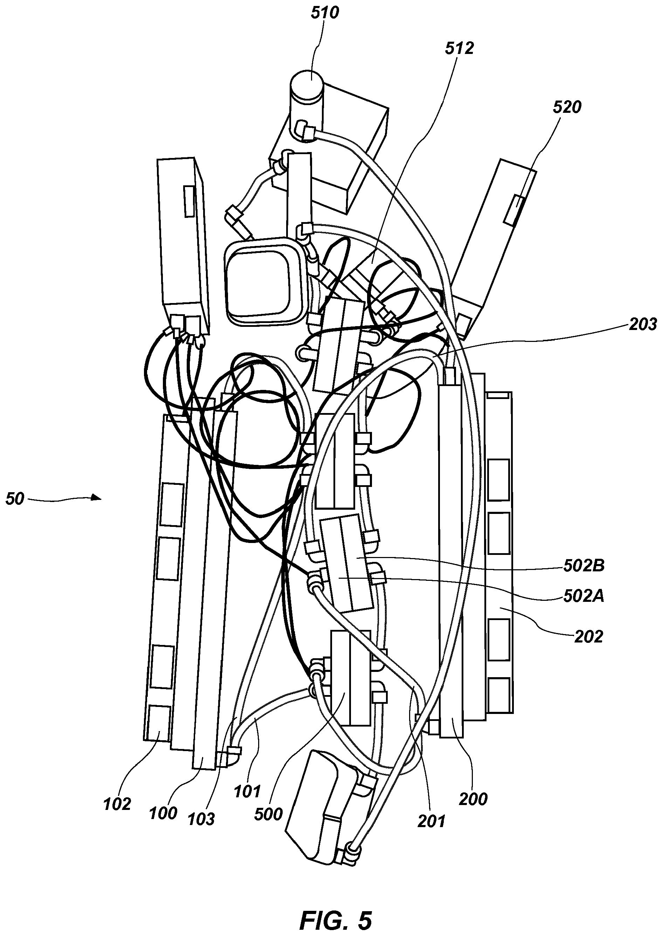

FIG. 5 is a top view of some of the components of the heating and cooling system of the cabinet of FIGS. 1-4 shown in isolation for testing.

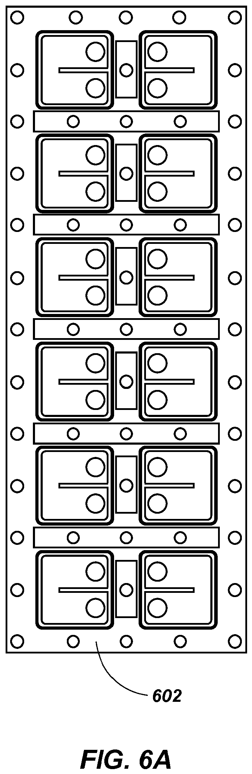

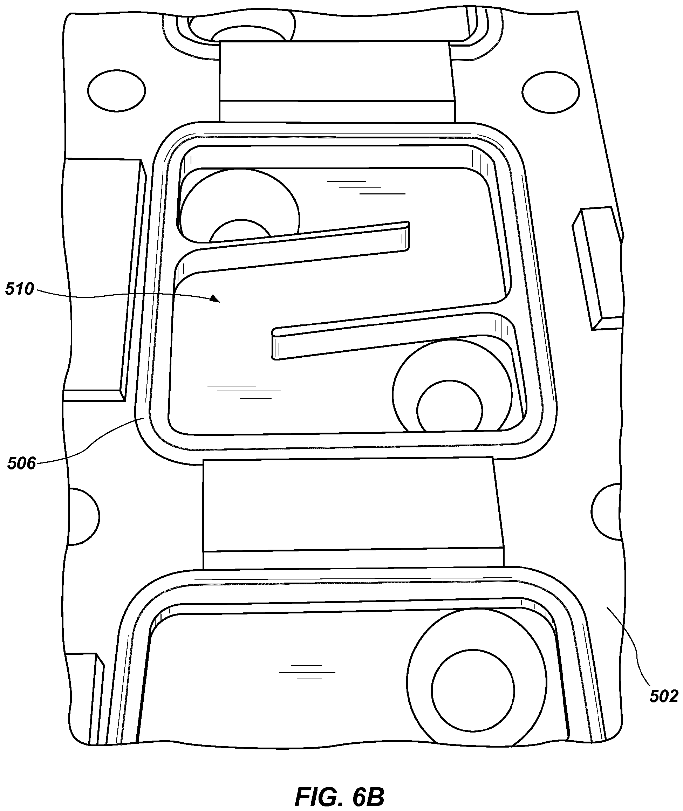

FIGS. 6A and 6B are plan views of two manifolds for use in the system of FIGS. 1-5.

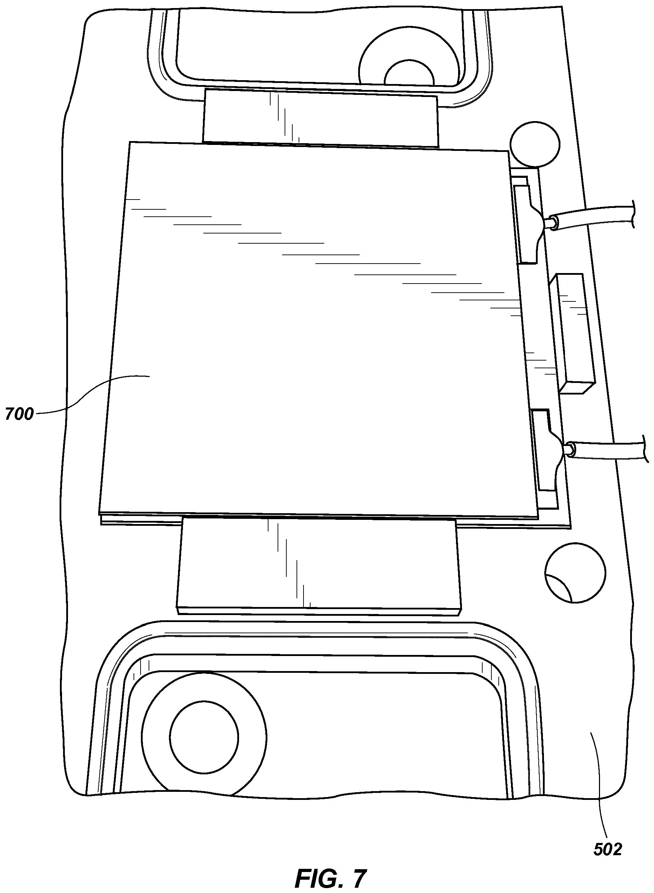

FIG. 7 is a plan view of a Peltier chip in position on the manifold of FIG. 6B.

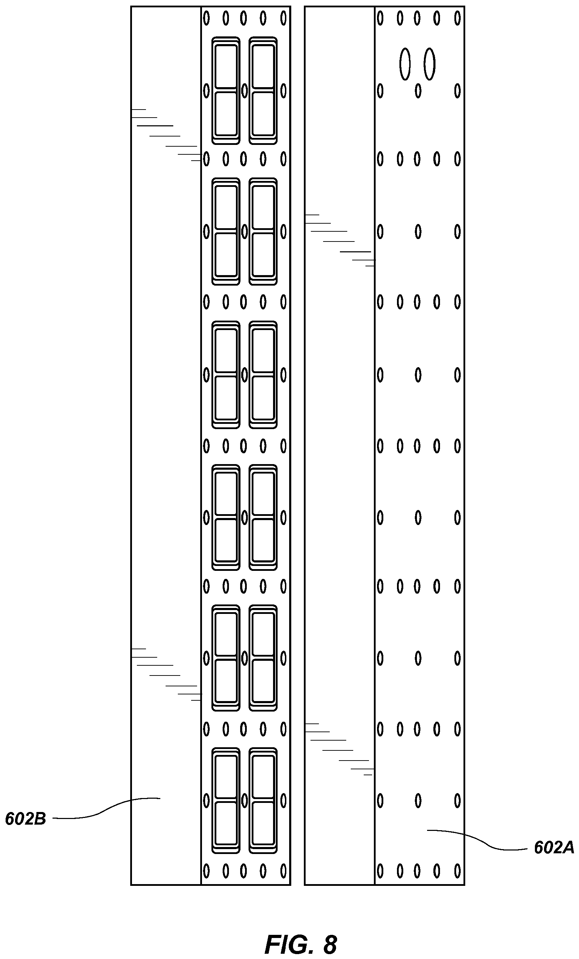

FIG. 8 is a perspective view of two manifolds of FIG. 6A, showing the relationship used in forming the manifold block of FIGS. 4 and 5.

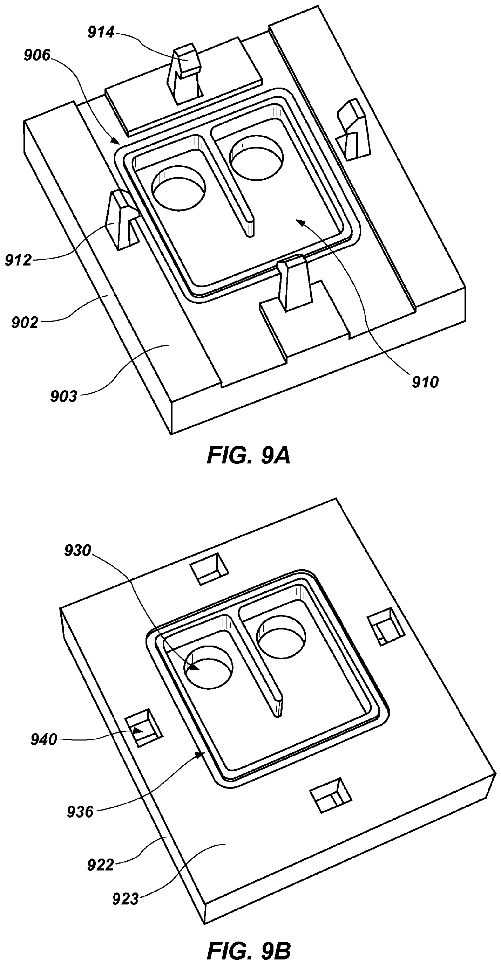

FIGS. 9A and 9B are perspective views of the bottom and top portions of another manifold for use in a system in accordance with the present disclosure.

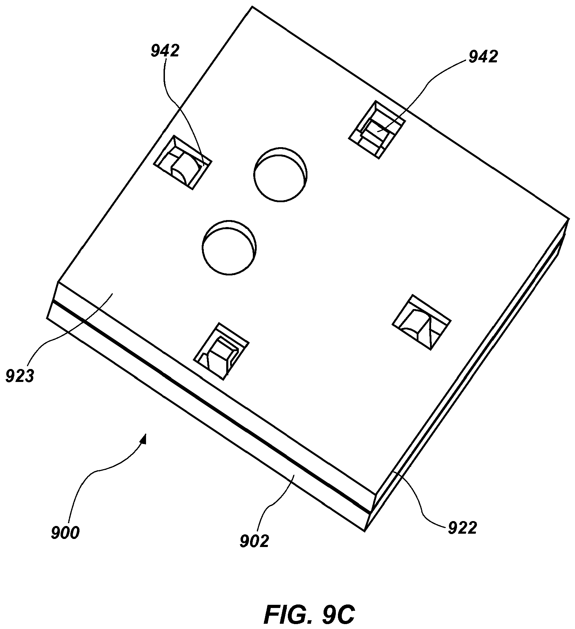

FIG. 9C is a top perspective view of the assembled manifold of FIGS. 9A and 9B.

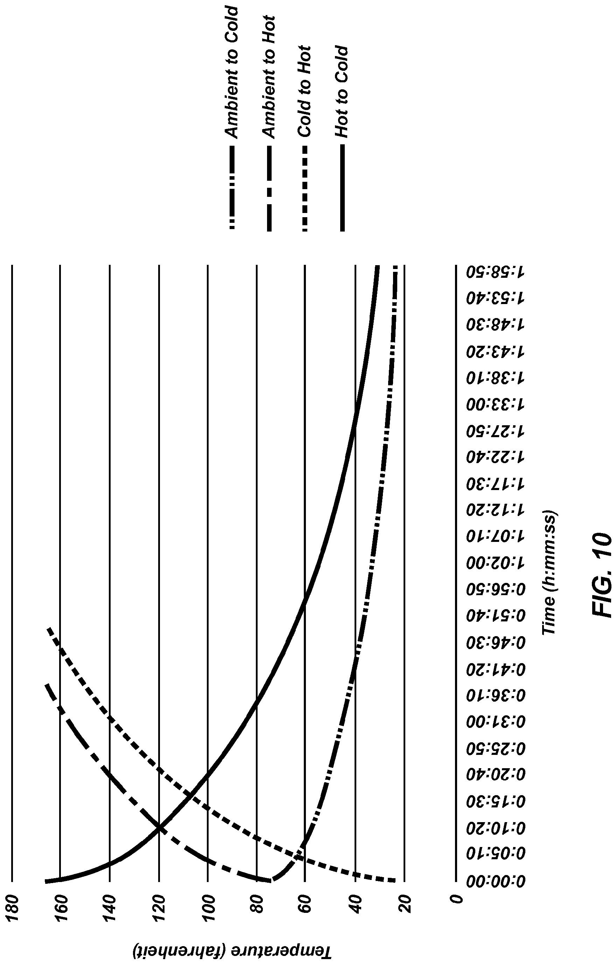

FIG. 10 is a graph depicting results of testing of the cabinet system depicted in FIGS. 1-4.

### DETAILED DESCRIPTION

The present disclosure relates to systems, methods and apparatus for heating or cooling food to an appropriate temperature for service in a standard food service container, such as a food cart. It will be appreciated by those skilled in the art that the embodiments herein described, while illustrating certain embodiments, are not intended to limit the disclosure. Those skilled in the art will also understand that various combinations or modifications of the embodiments presented herein can be made without departing from the scope of this disclosure and that all such alternate embodiments are within the scope of this description. Similarly, while the drawings depict illustrative embodiments of the devices and components illustrate the principles upon which those devices and components are based, they are only illustrative, and any modifications of the features presented here are to be considered within the scope of this disclosure.

FIGS. 1, 2, 3, and 4 depict a food transport cabinet 10 which is one illustrative embodiment of a cabinet in accordance with the present disclosure, and includes a temperature control system in accordance with the principles of the present disclosure.

The food transport cabinet 10 may be an insulated food service container which can be moved on casters. This may be similar to the type of cart used to transport prepared food to a location for catering, or for meal delivery in a hospital setting. Cart 10 may have a series of racks or holders interiorly thereof to hold trays of food or dishes. The cart 10 may be made of a blow molded or rotationally molded plastic material and have double walls, which are filled with insulating foam for maintaining the heat within the cabinet. In other embodiments, the cabinet 10 may be constructed of metal, and may have an intermediate insulative layer between the walls thereof. In order to provide access, a knuckle hinged door with a latching handle may be provided to close the open front of the cabinet.

A first radiator 100 may be disposed in the interior of the cabinet 10. Tubing 101 and 103 connects to the radiator through the back of the cabinet 10 interior into the rear shroud 120. One or more fans 102 may be associated with the radiator 100 to create a desired airflow within the cabinet 10 upon activation and wiring for the fans 102 may run to the cabinet 10 exterior as well. As depicted, the radiator 100 and fans 102 may be placed generally near a midpoint of the interior to facilitate airflow and minimize encroaching on useable storage space. It will be appreciated that in some embodiment, the first radiator 100 may comprise one or more separate radiators positioned at different locations around the interior of the cabinet 10.

On the rear surface 150 of the cabinet 10 exterior 150 a shroud which may be formed as a rectangular box may be disposed. A number of vents 154 may be formed in the shroud 152 to facilitate airflow and may correspond with a plurality of fans 202. As best depicted in FIG. 4B, the shroud may have side openings or other vents as well.

FIG. 5 depicts a number of components of a system 50 for heating and cooling the cabinet 10 which are assembled in isolation from the cabinet 10. In some embodiments, with the exception of the first radiator 100 and fans 102, these components will be retained in the shroud 152.

One or more manifold blocks 500 contain a one or more Peltier chips. An individual Peltier chip 700 is depicted in FIG. 7. Each Peltier chip 700 is a thermoelectric converter element whose effect is based on the Peltier principle in that they are capable of both cooling and heating by virtue of the fact that between their electrodes a temperature differential is created whose directionality is a function of the direction of the current. It will be appreciated that a suitable number of chips 700 may be used, which are sufficient to heat or cool the cabinet 10 interior to a suitable temperature. In the depicted embodiment, multiple blocks 500 are depicted, each containing four chips 700, but it will be appreciated, that a single block holding a differing number of chips may be used.

A typical Peltier chip 700 currently in use may be operated at from about 11 to about 15 volts to achieve optimal performance. It will be appreciated that different voltages may be used as the particular chips 700 may vary.

Each manifold block 500 may be formed from two manifolds 502, which are joined face to face with the chips 700 sandwiched therebetween. FIG. 8 depicts the face to face relationship of a second embodiment of manifolds 602A and 602B. The face 503 of each manifold 502 is best depicted in FIGS. 6 and 7 and contains a plurality of recesses for receiving a chip 700, each recess contains a flow path 510, which may be formed as a channel having a Z, S or other shape (such as the C shape of the manifolds 502 in FIG. 8) to direct the flow a heat transfer liquid from one opening to another. A shelf or notch may hold a seal, such as an O-ring 506, and a may provide a seat for a chip 700, as best shown in FIG. 7.

When the chip 700 is in place and manifolds 502A and 502B are connected to form a manifold block 500, the flow paths 510 direct the flow of a heat transfer liquid directly against the surface of the chip 700. Each manifold 502 also contains channels directing the fluid from the flow paths to tubing connected to the manifold. From the first manifold 502A, tubing 101 flows to the radiator 100 and the return tube 103 returns the fluid which has transferred its thermal energy using the radiator 100 back to the manifold block, which may be via a reservoir and a pump.

Similarly, from the second manifold 502B, tubing 201 flows to the second radiator 200 and the return tube 203 returns the fluid which has transferred its thermal energy using the radiator 200 back to the manifold block, which may be via a reservoir 510 and a pump 512. A transformer and/or power block 520 may be used to supply power to the chips 700 and the pump(s).

Each pump may be any pump with sufficient power to circulate heat transfer fluid through the tubing at a rate sufficient to allow the system to function at an acceptable rate of heating or cooling. Typically, centrifugal-type pumps may be used, although it may be possible to utilize a larger in-line pump.

Each radiator is typically finned to provide a larger surface area for convection heat exchange to the surrounding air. Since the apparatus 10 is used for heating or cooling food, a non-toxic heat transfer fluid may be used. One such fluid is water, although other acceptable commercially available non-toxic coolants, such as PAHNOL, offered by Houton Chemical, may be used.

As depicted in FIGS. 4A and 4B, the second radiator 200, associated fans 202, manifold blocks 500, pumps reservoirs and power blocks may all be disposed on the shroud 152. The second radiator 200 may be disposed in the shroud 152 near the vents 154. One or more fans 202 may be associated with the radiator 200 to create a desired airflow upon activation. As depicted, the radiator 200 and fans 202 may be placed generally in line with the vents 154 to facilitate airflow. It will be appreciated that in some embodiments, the second radiator 200 may comprise one or more separate radiators positioned at different locations, as with one across each row of the depicted vents 154 to facilitate rapid heat transfer.

For use, the fans 102 and 202 may be directly attached to the radiators 100 and 200 by screws, by a suitable thermal epoxy, by attachment using a mounting bracket, or in any other suitable manner. For example, the fans may be attached to a grillwork, which is then strapped to the radiator.

Electric power for the system may be provided by a battery, which may also be contained within the shroud 152. Such a battery powered device is extremely portable and may be used in locations where connection to an electrical outlet is undesirable or impossible. Of course, it will be appreciated that a transformer and line connection may be used to provide connection to any standard electrical outlet for power. Currently, it is preferred to operate the components of the apparatus 10 at a voltage of up to about 15V.

A control panel may be included for the system. In a simple embodiment, the control panel may simply consist of a single switch with three settings, OFF, COOL and HEAT. The switch may be a double-pull double-throw switch. Selection of either closed position, (HEAT or COOL) closes the circuit in an opposite direction, reversing the flow of electricity through the Peltier chips 102 and either cooling or heating at the first radiator 100, to heat or cool the cabinet 10 interior. At the same time the heat or cold generated on the opposite face of the chips 700 is transferred to the second radiator 200 for dispersal from the system.

It will be appreciated that in addition to cabinet 10, system 50 may be used to heat or cool any suitable enclosed space to a desired temperature. For example, other food service containers including coolers, heat boxes, and enclosed spaces in delivery vehicles may be heated or cooled with a system in accordance with the present invention. Additionally, system 50 may be used with containers or structures for uses other than food service. For example, a cabinet for heated or cooled plates at a buffet service, for a cabinet for heating or cooling linens, for a storage container for transporting or storing medical supplies, or for providing a space with a desired temperature for another purpose.

In other embodiments, the control may include multiple switches to individually or jointly control either the operational mode of the Peltier elements, or the functioning of the pump or fans. In other embodiments, variable current controls may be used to adjust the temperature within the cabinet 10 by varying the current through the Peltier elements 700. In other embodiments, a logic control circuit may be used, such a as logic control board on a semiconductor chip. With a logic control circuit, a desired temperature may be selected and the system may cycle on and off as appropriate to maintain the cabinet at or near the selected temperature.

Turning to FIGS 9A, 9B and 9C, another embodiment of a manifold block 900 which may be useful in an embodiment of a system in accordance with the present disclosure is depicted. Block 900 may be formed from two manifolds, designated first manifold 902 and second manifold 922, which may be joined face to face with at least one chip 700 sandwiched therebetween, as depicted in FIG. 9C.

The face 903 and 923 of each manifold 902 and 922 are best depicted in FIGS. 9A and 9B and contains at least one recess for receiving a chip 700, each recess contains a flow path 910 or 930, which may be formed as a channel having a Z, S or other shape to direct the flow of a heat transfer liquid from one opening O to another. A recessed notch 906 or 926 is present to hold a seal, such as an O-ring, and may provide a seat for a chip 700. It will be appreciated that in other embodiments, multiple recesses with associated notches may be present.

In use, the seal may be an O-ring that it significantly thicker in height than the recessed depth of notch 906 or 936. This allows the O-ring to function both as a sealing element and as an adjustment element to account for any variations that may occur between various chips 700 due to manufacturing differences. It also allows the O-ring to function as a cushion, protecting the chip 700 from forces that may otherwise damage it during assembly of the block 900 or during operation.

First manifold 902 includes a plurality of connection members 910 formed as extensions rising generally perpendicularly from the face 903 of the block. Each connection member 910 has an enlarged upper portion 912 with a planar undercut 914 disposed thereon parallel to the face 903. The enlarged portion 912 may have a sloped face to facilitate assembly. In the depicted embodiment, there are four connection members 910, one disposed on each side of the recess. However, it will be appreciated that this number may vary as the number of recesses vary and the number of chips 700 that may be placed in the manifold 900 varies. For example, a two-chip embodiment may require a different number of connection members as the arraignment and size may vary. Any number may be used, provided a suitable seal can be achieved.

Second manifold 922 has corresponding connection recesses 940 that are formed therein. Each connection recess 940 includes an opening passing through the body of the manifold 922. As depicted in FIG. 9C, on the rear surface 938 of the manifold 922, each connection recess 940 is formed as a recess that includes a shelf 942. Upon insertion of a connection member 910 though the recess 940, the connection member 910 may slightly flex to allow the enlarged portion 912 to pass through the recess 940, where upon the undercut 914 of the connection member 910 resides above the shelf 942 abuttingly retaining the manifolds 902 and 922 together to form the block 900.

For assembly, O-rings may be placed in notches 906 or 936, the appropriate number of chips 700 placed in position in the recess(es) on either manifold 902 or 922 and the manifolds placed face to face and compressed to be joined by the interaction of the connection structures. Use of cushioning O-rings may protect the chips through this process. It will be appreciated that in addition to the depicted connection structures, other connection structures having differing shapes that can maintain the relationship between the manifolds using an abutting connection or interference fit may be used. Embodiments where each manifold includes some connection recesses and some connection members that correspond to the other recess are also contemplated. Manifolds 902 and 922 may be constructed from an injected molded plastic material capable of absorbing the thermal changes associated with the system.

### EXPERIMENTAL DATA

A series of tests were run on an embodiment similar to that depicted in FIGS. 1-7. The cabinet 10 was a Cambro CAMTHERM CMBHC1826TTR with an interior volume of about 16 cubic feet (internal dimensions of about 25.5 inches by about 23.75 inches by about 49.5 inches). The system used 24 Laird LHT12-60 Peltier chips which were contained in the manifolds depicted in FIGS. 4, 5, 6B and 7, which were run at a voltage of about 11.23 DC volts. One internal radiator having dimensions of about 20 inches by about 5 inches by about 1 inch within the cabinet was used and four external radiators having the same dimensions were used in the shroud. The heat transfer fluid was SAFE-T-THERM 40% by Houghton Chemical from the internal radiator to the manifold and water from the manifold to the external radiators which was pumped at a rate of about 4.7 gpm from the manifold to the respective radiators. The cabinet was repeatedly taken from an ambient temperature to a heated condition or a cold condition and from a cold condition to a heated condition, using the system for heating and cooling. Ambient conditions were a temperature of 75 degrees Fahrenheit and the tests were conducted at an altitude of 4436 feet above sea level. A graph of the averaged test results is presented in FIG. 10.

From this test data, the empty cabinet can be heated from ambient temperature to an acceptable temperature for keeping food warm (about 140 degrees F) in about 15 to 20 minutes. Similarly, the cabinet was taken to an acceptable refrigerator temperature of about 35 degrees F or less in about an hour and 15 minutes. From the cold condition, the cabinet was able to be taken to a warming condition in less than about 45 minutes. From a heated condition, it could be cooled to an acceptable temperature in less than about 2 hours. The heated and cooled conditions can then be maintained indefinitely. It is noted that this is an improvement over previous cabinets, which merely insulate food, may require another heating or cooling intervention (as by filling with steam trays or ice prior to the placement of food).

While this invention has been described in certain embodiments, the present invention is solely limited by the appended claims.

## Claims

1. System for bringing a cabinet (10) to a desired temperature and maintaining that desired temperature by heating or cooling the cabinet (10), comprising:
a first manifold (602A) for heat transfer fluid flow;
at least one Peltier element (700) in contact with the first manifold (602A), such that a first heat transfer fluid can directly contact a first surface of the at least one Peltier element (700) by flowing through the first manifold (602A);
at least a first fluid-to-air radiator (100) in fluid communication with the first manifold (602A) for placement inside the cabinet (10);
a second manifold (602B) for heat transfer fluid flow, the second manifold (602B) in contact with the at least one Peltier element (700), such that a second heat transfer fluid can directly contact a second surface of the at least one Peltier element (700) by flowing through the second manifold (602B); and
at least a second fluid-to-air radiator (200) in fluid communication with the second manifold (602B) for placement outside the cabinet (10);
wherein application of current in a first direction to the at least one Peltier element (700) generates heat that is transmitted to the at least a first fluid-to-air radiator (100) to thereby heat an interior of the cabinet (10), and application of current in a second direction to the at least one Peltier element (700) causes a reduction in temperature that is transmitted to the at least a first fluid-to-air radiator (100) to thereby cool the interior of the cabinet (10) as generated heat is transmitted to the at least a second fluid-to-air radiator (200) for dispersal outside the cabinet (10),
**characterized by** that
the first (602A) and second manifolds (602B) contain each at least one recess for receiving a Peltier element of the at least one Peltier element (700) whereas each recess contains a flow path (510).

2. The system of claim 1, wherein the first manifold (602A) and second manifold (602B) are attached to one another to form a manifold block (500) with the at least one Peltier element (700) disposed therein.

3. The system of claim 2, wherein the first manifold (602A) and second manifold (602B) are connected to one another by connection structures (912, 940) that retain them together by an interference fit.

4. The system of claim 2 or claim 3, wherein an O-ring (506) is disposed between the at least a first manifold (602A) and the at least one Peltier element (700), the O-ring (506) at least partially residing in a groove (906) formed in the at least a first manifold (602A) and having a thickness greater than the groove (906).

5. The system of any of claims 1 through 4, wherein the at least one Peltier element (700) comprises a plurality of Peltier elements (700).

6. The system of any of claims 1 through 5, wherein the at least a first fluid-to-air radiator (100) comprises a fluid tubing attached to a number of cooling fins.

7. The system of any of claims 1 through 6, further comprising at least one fan (102) disposed to circulate air across the at least a first fluid-to-air radiator (100).

8. The system of any of claims 1 through 7, wherein the at least a second fluid-to-air radiator (200) comprises a fluid tubing attached to a number of cooling fins.

9. The system of any of claims 1 through 8, further comprising at least one fan (202) disposed to circulate air across the at least a second fluid-to-air radiator (200).

10. Portable food storage or delivery cabinet (10) for maintaining food at a desired temperature, comprising a system according to one of claims 1 to 9, **characterized in that**:
- the cabinet (10) comprises a cabinet body having an interior and an exterior and at least one opening, wherein the cabinet (10) further comprises at least a first door for closing at least one opening;
- the first fluid-to-air radiator (100) is disposed in the cabinet (10) body interior;
- the first manifold (602A) is disposed outside the cabinet (10) interior; and
- the second manifold (602B) is placed outside the cabinet (10).

11. The cabinet of claim 10, wherein the at least a first fluid-to-air radiator (100) is disposed in a middle portion of the cabinet (10) interior.

12. The cabinet of any of claim 10 or claim 11, wherein the at least a second fluid-to-air radiator (200) is disposed in a housing (152) on the rear of the cabinet (10).

## Patentansprüche

1. System, um einen Behälter (10) auf eine gewünschte Temperatur zu bringen und diese gewünschte Temperatur durch Wärmen oder Kühlen des Behälters (10) zu halten, umfassend:
einen ersten Verteiler (602A) für einen Strom von Wärmeübertragungsfluid,
mindestens ein Peltierelement (700), das mit dem ersten Verteiler (602A) derart in Berührung steht, dass ein erstes Wärmeübertragungsfluid unmittelbar mit einer ersten Oberfläche des mindestens einen Peltierelementes (700) in Berührung stehen kann, indem es den ersten Verteiler (602A) durchfließt,
mindestens einen ersten Fluid-Luft-Kühler (100), der durch ein Fluid mit dem ersten Verteiler (602A) kommuniziert, zum Anordnen im Inneren des Behälters (10),
einen zweiten Verteiler (602B) für einen Strom von Wärmeübertragungsfluid, wobei der zweite Verteiler (602B) mit dem mindestens einen Peltierelement (700) derart in Berührung steht, dass ein zweites Wärmeübertragungsfluid unmittelbar mit einer zweiten Oberfläche des mindestens einen Peltierelementes (700) in Berührung stehen kann, indem es den zweiten Verteiler (602B) durchfließt, und
mindestens einen zweiten Fluid-Luft-Kühler (200), der durch Fluid mit dem zweiten Verteiler (602B) kommuniziert, zum Anordnen außerhalb des Behälters (10),
wobei Anlegen von Strom in einer ersten Richtung an das mindestens eine Peltierelement (700) Wärme erzeugt, die auf den mindestens einen ersten Fluid-Luft-Kühler (100) übertragen wird,
um damit das Innere des Behälters (10) zu wärmen, und Anlegen von Strom in einer zweiten Richtung an das mindestens eine Peltierelement (700) eine Temperaturverringerung bewirkt, die auf den mindestens einen ersten Fluid-Luft-Kühler (100) übertragen wird, um damit das Innere des Behälters (10) zu kühlen, wobei erzeugte Wärme auf den mindestens einen zweiten Fluid-Luft-Kühler (200) zur Abgabe außerhalb des Behälters (10) übertragen wird,
**dadurch gekennzeichnet, dass**
der erste (602A) und der zweite Verteiler (602B) jeweils mindestens eine Vertiefung zur Aufnahme eines Peltierelementes unter den ein oder mehreren Peltierelementen (700) aufweisen, wobei jede Vertiefung einen Durchflussweg (510) aufweist.

2. System nach Patentanspruch 1, in dem der erste Verteiler (602A) und der zweite Verteiler 602B) aneinander befestigt sind, um einen Verteilerblock (500) zu bilden, wobei das Peltierelement (700) darin angeordnet ist.

3. System nach Patentanspruch 2, in dem der erste Verteiler (602A) und der zweite Verteiler 602B) durch Verbindungselemente (912, 940) miteinander verbunden sind, die sie durch Presspassung zusammenhalten.

4. System nach Patentanspruch 2 oder 3, in dem ein O-Ring (506) zwischen dem mindestens einen ersten Verteiler (602A) und dem mindestens einen Peltierelement (700) angeordnet ist, indem der O-Ring (506) mindestens teilweise in einer Rille (906) ruht, die im mindestens einen ersten Verteiler (602A) ausgebildet ist, und eine größere Dicke aufweist, als die Rille (906).

5. System nach irgendeinem der Patentansprüche 1 bis 4, in dem das mindestens eine Peltierelement (700) mehrere Peltierelemente (700) umfasst.

6. System nach irgendeinem der Patentansprüche 1 bis 5, in dem der mindestens eine erste Fluid-Luft-Kühler (100) Fluidleitungen aufweist, die an einer Anzahl von Kühlrippen angebracht sind.

7. System nach irgendeinem der Patentansprüche 1 bis 6, außerdem mindestens einen Lüfter (102) umfassend, der dafür angeordnet ist, Luft durch den mindestens einen ersten Fluid-Luft-Kühler (100) zu blasen.

8. System nach irgendeinem der Patentansprüche 1 bis 7, in dem der mindestens eine zweite Fluid-Luft-Kühler (200) Fluidleitungen aufweist, die an einer Anzahl von Kühlrippen angebracht sind.

9. System nach irgendeinem der Patentansprüche 1 bis 8, außerdem mindestens einen Lüfter (202) umfassend, der dafür angeordnet ist, Luft durch den mindestens einen zweiten Fluid-Luft-Kühler (200) zu blasen.

10. Tragbarer Lebensmittellager- oder -lieferbehälter (10) zum Halten von Lebensmitteln auf einer gewünschten Temperatur, ein System nach irgendeinem der Patentansprüche 1 bis 9 umfassend, **dadurch gekennzeichnet, dass**
- der Behälter (10) einen Behälterkörper umfasst, der über ein Inneres und ein Äußeres verfügt und über mindestens eine Öffnung, wobei der Behälter (10) außerdem mindestens eine erste Tür zum Schließen mindestens einer Öffnung umfasst,
- der erste Fluid-Luft-Kühler (100) im Inneren des Behälterkörpers (10) angeordnet ist,
- der erste Verteiler (602A) außerhalb des Inneren des Behälters (10) angebracht ist, und
- der zweite Verteiler (602B) außerhalb des Behälters (10) angebracht ist.

11. Behälter nach Patentanspruch 10, in dem der mindestens eine erste Fluid-Luft-Kühler (100) in einem mittleren Bereich des Inneren des Behälters (10) angeordnet ist.

12. Behälter nach irgendeinem der Patentansprüche 10 oder 11, in dem der mindestens eine zweite Fluid-Luft-Kühler (200) in einem Gehäuse (152) an der Rückseite des Behälters (10) angeordnet ist.

## Revendications

1. Système pour amener une armoire (10) à une température souhaitée pour maintenir cette température souhaitée en chauffant ou en refroidissant l'armoire (10), système comprenant :
Un premier distributeur (602A) pour le flux de fluide caloporteur ;
Au moins un élément de Peltier (700) en contact avec le premier distributeur (602A) de telle manière qu'un premier flux de fluide caloporteur peut entrer directement en contact avec une première surface du au moins un élément de Peltier (700) en s'écoulant à travers le premier distributeur (602A),
Au moins un premier radiateur refroidissant le fluide à l'air (100) en communication fluidique avec le premier distributeur (602A) qui doit être placé à l'intérieur de l'armoire (10),
Un second distributeur (602B) pour le flux de fluide caloporteur, le second distributeur (602B) étant en contact avec le au moins un élément de Peltier (700) de telle manière qu'un second flux de fluide caloporteur peut entrer directement en contact avec une seconde surface du au moins un élément de Peltier (700) en s'écoulant à travers le second distributeur (602B) et
Au moins un second radiateur refroidissant le fluide à l'air (200) en communication fluidique avec le second distributeur (602B) qui doit être placé à l'extérieur de l'armoire (10),
cependant que l'application de courant dans une première direction au moins un élément de Peltier (700) génère de la chaleur qui est transmise au moins un premier radiateur refroidissant le fluide à l'air (100) pour ainsi chauffer un espace intérieur de l'armoire (10) et l'application de courant dans une seconde direction au moins un élément de Peltier (700) provoque une réduction de température qui est transmise au moins un premier radiateur refroidissant le fluide à l'air (100) pour ainsi refroidir l'espace intérieur de l'armoire (10) alors que de la chaleur générée est transmise au moins un second radiateur refroidissant le fluide à l'air (200) pour la dispersion à l'extérieur de l'armoire (10),
**caractérisé en ce que**
le premier (602A) et le second distributeur (602B) contiennent chacune au moins un évidement pour recevoir un élément de Peltier du au moins un élément de Peltier (700), alors que chaque évidement contient un passage d'écoulement (510).

2. Système selon la revendication 1, cependant que le premier (602A) et le second distributeur (602B) sont fixés l'une à l'autre pour former un bloc de distributeurs (500) avec le au moins un élément de Peltier (700) qui y est disposé.

3. Système selon la revendication 2, cependant que le premier (602A) et le second distributeur (602B) sont reliés l'une à l'autre par des structures de connexion (912, 940) qui les retiennent ensemble par un ajustement serré.

4. Système selon la revendication 2 ou 3, cependant qu'un joint torique (506) est disposé entre le au moins un premier distributeur (602A) et le au moins un élément de Peltier (700), le joint torique (506) résidant au moins partiellement dans une rainure (906) formée dans la au moins un premier distributeur (602A) et ayant une épaisseur supérieure à la rainure (906).

5. Système selon l'une quelconque des revendications 1 à 4, cependant que le au moins un élément de Peltier (700) comprend une pluralité d'éléments de Peltier (700).

6. Système selon l'une quelconque des revendications 1 à 5, cependant que le au moins un premier radiateur refroidissant le fluide à l'air (100) comprend un distributeur pour fluide fixé à un certain nombre d'ailettes de refroidissement.

7. Système selon l'une quelconque des revendications 1 à 6 comprenant de plus au moins une soufflante (102) disposée pour faire circuler de l'air sur le au moins un premier radiateur refroidissant le fluide à l'air (100).

8. Système selon l'une quelconque des revendications 1 à 7, cependant que le au moins second radiateur refroidissant le fluide à l'air (200) comprend un distributeur pour fluide fixé à un certain nombre d'ailettes de refroidissement.

9. Système selon l'une quelconque des revendications 1 à 8 comprenant de plus au moins une soufflante (202) disposée pour faire circuler de l'air sur le au moins un second radiateur refroidissant le fluide à l'air (200).

10. Armoire portable de stockage ou de fourniture d'aliments (10) pour maintenir des aliments à une température souhaitée, comprenant un système selon l'une des revendications 1 à 9, **caractérisée en ce que** :
- l'armoire (10) comprend un corps d'armoire ayant un intérieur et un extérieur et au moins une ouverture, cependant que l'armoire (10) comprend de plus au moins une première porte pour fermer au moins une ouverture ;
- le premier radiateur refroidissant le fluide à l'air (100) est disposé dans l'intérieur du corps d'armoire (10) ;
- le premier distributeur (602A) est disposé à l'extérieur de l'intérieur de l'armoire (10) et
- le second distributeur (602B) est placé à l'extérieur de l'armoire (10).

11. Armoire selon la revendication 10, cependant que le au moins un premier radiateur refroidissant le fluide à l'air (100) est disposé dans une portion centrale de l'intérieur de l'armoire (10).

12. Armoire selon l'une quelconque des revendications 10 ou 11, cependant que le au moins un second radiateur refroidissant le fluide à l'air (200) est disposé dans un boîtier (152) sur l'arrière de l'armoire.
